# EUROPEAN PATENT SPECIFICATION

(11) **EP 2 019 029 B1**
(45) Date of publication and mention of the grant of the patent: **02.12.2009**
(21) Application number: 08007329.9
(22) Date of filing: 14.04.2008
(51) Int. Cl.: B62J 17/04

(54) **Mounting structure for windscreen**
Montagestruktur für eine Windschutzscheibe
Structure d'assemblage pour essuie-glace

(30) Priority: 25.07.2007 JP 2007193633
(43) Date of publication of application: 28.01.2009
(73) Proprietor: Honda Access Corporation, Niiza-shi Saitama 352-8589 (JP)
(72) Inventor: Kaji, Keiichi c/o Honda Access Corp.,, Niiza-shi Saitama 352-8589 (JP); Nagasaka, Tatsuhiko c/o Honda Access Corp.,, Niiza-shi Saitama 352-8589 (JP); Kawano, Takeshi c/o Honda Access Corp. IP & Legal Dept., Saitama 352-8589 (JP)
(74) Representative: Trossin, Hans-Jürgen

(56) References cited:
- EP-A- 1 621 454
- EP-A- 1 759 969
- JP-A- 10 138 976

## Description

### BACKGROUND OF THE INVENTION

### Field of the Invention:

The present invention relates to a mounting structure for mounting a windscreen on a cowling which covers a front portion of a motor vehicle such as a two-wheeled motor vehicle or the like.

### Description of the Related Art:

Some cowlings which cover front portions of motor vehicles including two-, three- and four-wheeled motor vehicles are combined with windscreens of various shapes for creating a better driving environment by preventing wind from blowing against the vehicle's occupant.

One windscreen device for use on a two-wheeled motor vehicle as disclosed in Japanese Laid-Open Patent Publication No. 10-138976 includes a small-size windscreen disposed above an upper slanted surface of a handle cover, the slanted surface extending rearward and upward from a front central portion of the handle cover to a region in front of a speedometer, the windscreen having an air inlet port defined therein. The disclosed windscreen device is capable of spreading a ramming air flow in a wide range over the abdominal region of the rider of the two-wheeled motor vehicle, thereby reducing a local air pressure that the rider feels and improving the environment in which the rider rides on the two-wheeled motor vehicle.

Depending on the manner in which the two-wheeled motor vehicle is driven and the weather conditions which the two-wheeled motor vehicle is subjected to, air may flow around the side edges of the windscreen into the space behind the windscreen. Therefore, it is desirable to more effectively prevent wind from blowing against the vehicle's occupant from wind and more improve the environment in which the rider rides on the motor vehicle by controlling the air flows around the side edges of the windscreen into the space behind the windscreen.

### SUMMARY OF THE INVENTION

It is a general object of the present invention to provide a mounting structure for mounting a windscreen on a cowling which covers a front portion of a vehicle such as a two-wheeled motor vehicle or the like, the mounting structure being capable of rectifying air flows around the side edges of the windscreen to more effectively prevent wind from blowing against the vehicle's occupant.

According to one aspect of the present invention, there is provided a mounting structure for mounting a windscreen on a cowling which covers a front portion of a motor vehicle, comprising a mounting member fixed to an outer surface of the cowling positionally corresponding to left and right sides of the windscreen, for interconnecting the windscreen and the cowling which are spaced from each other by a predetermined distance, the windscreen and the cowling having respective front ends with a clearance being defined therebetween for introducing air through the clearance, the clearance being disposed on the lateral side of the mounting member, the mounting member having an air inlet port which is open forward, a passage for allowing air to flow in the mounting member, and an air outlet which is in fluid communication with the passage and is open laterally, for discharging air flowing from the air inlet port into the passage through the air outlet laterally outward from the mounting member, whereby air can be introduced simultaneously through the clearance and the air inlet port.

With the above arrangement, since the air inlet port for introducing air is defined in the mounting member in addition to the clearance for introducing air, air flow introduced through the clearance is rectified to flow along the inner surface of the windscreen rearward toward and beyond the head of the driver of the motor vehicle. Air flow introduced through the air inlet port of the mounting member is rectified to flow laterally outward from the motor vehicle while evading the driver. Air flows around the side edges of the windscreen into the space behind the windscreen are thus reduced, and hence the Karman vortex street against the abdominal region of the driver and the pressure of air on the abdominal region of the driver are effectively reduced. The mounting structure is thus capable of more effectively protecting the driver from wind, and improving the environment in which the driver rides on the motor vehicle.

The mounting member may be of a channel-shaped cross section in a transverse direction of the motor vehicle, and the channel-shaped cross section may have an opening facing the outer surface of the cowling to define the passage. The passage may be blocked by a rib extending in the mounting member along the transverse direction of the motor vehicle, the air outlet being held in fluid communication with the passage between the rib and the air inlet port, whereby the air flowing from the air inlet port into the passage is discharged to laterally outward from the mounting member. If the windscreen is of a large size, though the mounting member supporting the large-size windscreen is of a large vertical length due to the large size of the windscreen, the rib allows the air outlet to be located in a desired position such as in the central areas of the mounting member. Accordingly, the air can reliably be discharged from the mounting member laterally outward from the motor vehicle, and the Karman vortex street caused by the air flows from the side edges of the windscreen can reliably be reduced, with a relatively simple structure.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a perspective view, partly omitted from illustration, schematically showing a front portion of a two-wheeled motor vehicle incorporating therein a mounting structure for mounting a windscreen according to an embodiment of the present invention;
FIG. 2 is an exploded perspective view, partly omitted from illustration, showing how mounting members of the mounting structure are mounted on a cowling of the two-wheeled motor vehicle shown in FIG. 1;
FIG. 3 is an exploded perspective view, partly omitted from illustration, showing how a windscreen of the mounting structure is mounted on the mounting members that have been mounted on the cowling;
FIG. 4A is a front elevational view of one of the mounting members;
FIG. 4B is a side elevational view of the mounting member shown in FIG. 4A;
FIG. 4C is a rear elevational view of the mounting member shown in FIG. 4A;
FIG. 5 is a schematic front elevational view of the two-wheeled motor vehicle shown in FIG. 1 as viewed obliquely from below;
FIG. 6 is a schematic cross-sectional view, partly omitted from illustration, taken along line VI - VI of FIG. 5;
FIG. 7 is a side elevational view, partly omitted from illustration, schematically showing the two-wheeled motor vehicle shown in FIG. 1;
FIG. 8 is a front elevational view, partly omitted from illustration, schematically showing the two-wheeled motor vehicle shown in FIG. 1;
FIG. 9 is a perspective view, partly omitted from illustration, schematically showing the two-wheeled motor vehicle shown in FIG. 1 which incorporates a small-size windscreen;
FIG. 10A is a front elevational view of a mounting member of a mounting structure for mounting a windscreen according to a modification;
FIG. 10B is a side elevational view of the mounting member shown in FIG. 10A;
FIG. 10C is a rear elevational view of the mounting member shown in FIG. 10A;
FIG. 11 is a perspective view, partly omitted from illustration, schematically showing a front portion of a two-wheeled motor vehicle incorporating therein the mounting structure according to the modification, as viewed from behind a windscreen; and
FIG. 12 is a perspective view, partly omitted from illustration, schematically showing the front portion of the two-wheeled motor vehicle shown in FIG. 11, as viewed from the rider seated on the seat of the two-wheeled motor vehicle.

### DESCRIPTION OF THE PREFERRED EMBODIMENTS

Mounting structures for mounting a windscreen according to preferred embodiments of the present invention as incorporated in two-wheeled motor vehicle will be described in detail below with reference to the accompanying drawings.

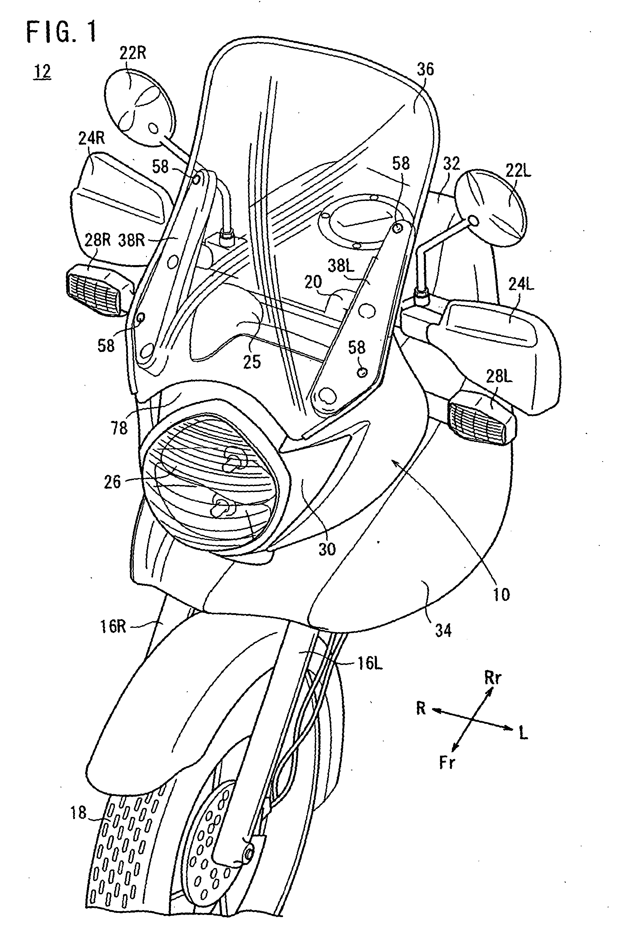

FIG. 1 is a perspective view, partly omitted from illustration, schematically showing a front portion of a two-wheeled motor vehicle 12 incorporating therein a mounting structure 10 for mounting a windscreen according to an embodiment of the present invention. The illustrated two-wheeled motor vehicle 12 which incorporates therein the mounting structure 10 comprises an on-road-type riding motor vehicle. The two-wheeled motor vehicle 12 includes mechanisms and components provided as left and right mechanisms and left and right components in symmetrical pairs. The left mechanisms and components are denoted by reference numerals with a suffix "L", and the right mechanisms and components are denoted by reference numerals with a suffix "R". For an easier understanding of the present invention, the left, right, front, and rear sides of the two-wheeled motor vehicle 12 as viewed from the rider seated on the seat of the two-wheeled motor vehicle 12 are indicated by respective arrows L, R, Fr, Rr in the drawings.

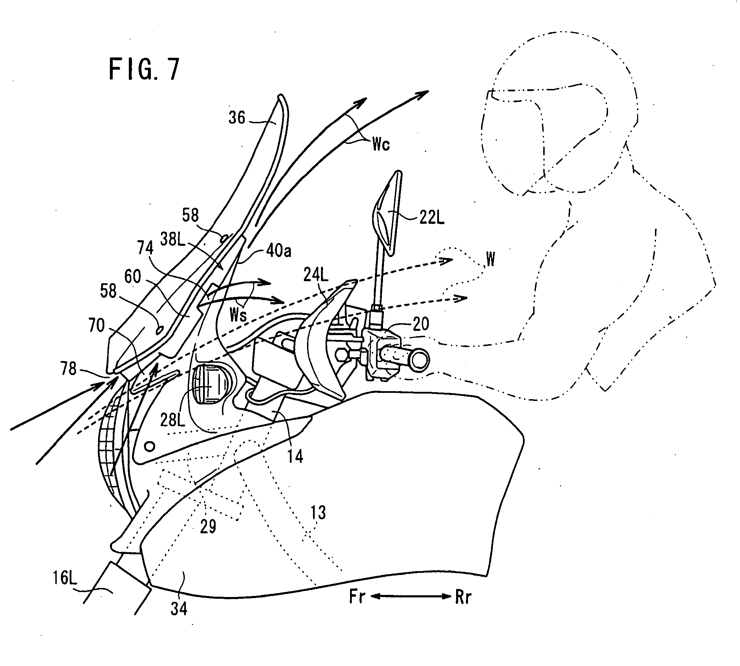

As shown in FIG. 1, the two-wheeled motor vehicle 12 has a vehicle frame including a main frame 13 (see FIG. 7) and a pair of front fork members 16L, 16R supported by a head pipe 14 pivotally mounted on a front end of the main frame 13. A front wheel 18, which is a steerable wheel, is rotatably supported on the lower ends of the front fork members 16L, 16R. The front wheel 18 can be steered by a handle 20 through the front fork members 16L, 16R. On the handle 20, there are mounted a pair of left and right side mirrors 22L, 22R and a pair of hand covers 24L, 24R for protecting the hands of the rider that grip respective grips of the handle 20, from rain, wind, and debris. An instrument unit 25 including a speedometer, etc. is disposed in front of the handle 20. A headlight 26 is disposed in front of the instrument unit 25, and a pair of left and right direction indicators 28L, 28R is disposed beneath the instrument unit 25.

Part of the two-wheeled motor vehicle 12 around the headlight 26 is covered with a cowling 30 fixed to a subframe 29 (see FIG. 7) extending forward from the main frame 13. Part of the of the two-wheeled motor vehicle 12 ranging from below the cowling 30 to a fuel tank 32 is also covered with another cowling 34. These parts in the front portion of the two-wheeled motor vehicle 12 are covered with the cowlings 30, 34 for reduced air resistance and improved appearance. The two-wheeled motor vehicle 12 also includes an engine, a rider's seat, a rear wheel, etc., not shown, which are successively arranged rearward from the fuel tank 32.

The mounting structure 10 incorporated in the two-wheeled motor vehicle 12 allows a large-size windscreen 36 to be mounted on the cowling 30 by a pair of mounting members (vertically elongate stays) 38L, 38R for preventing wind from blowing against the rider.

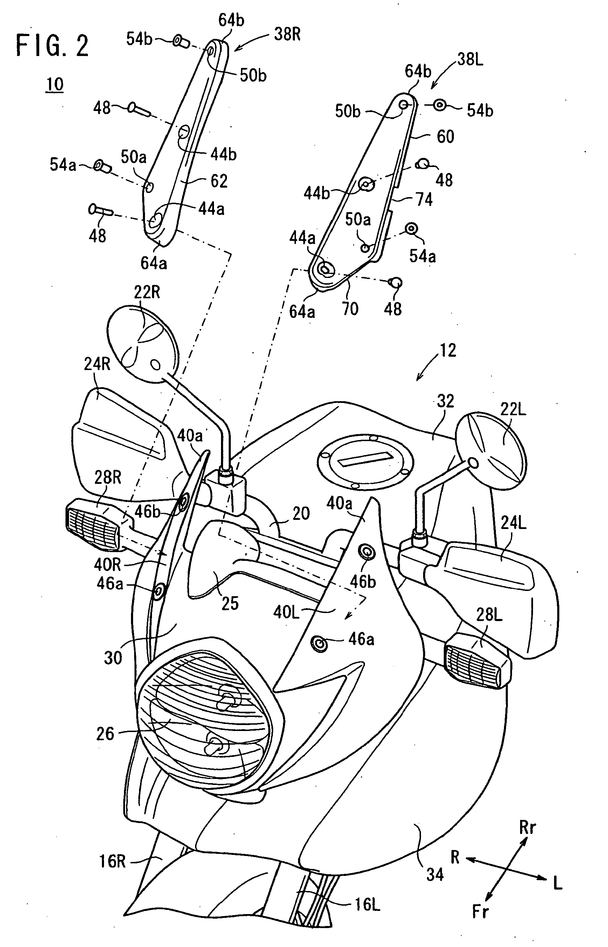

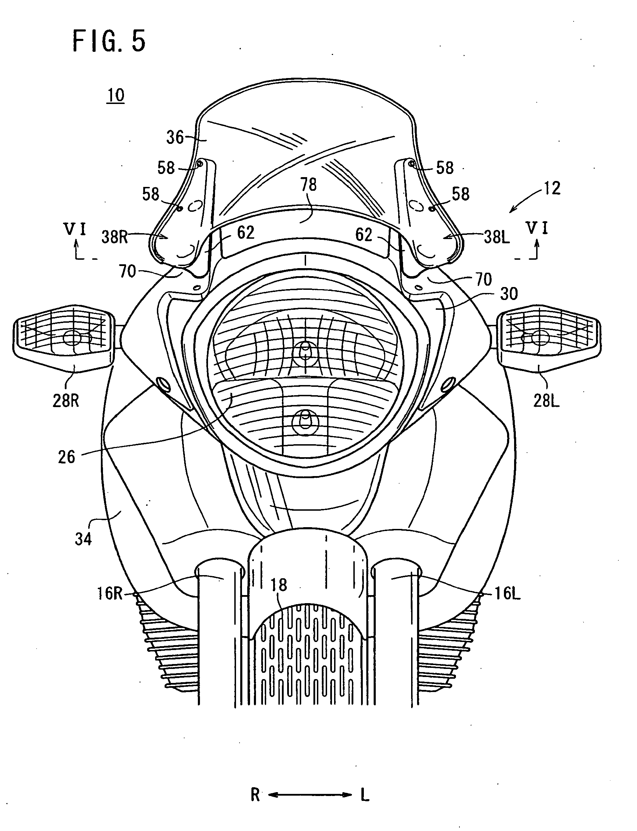

The mounting structure 10 according to the present embodiment will be described in detail below with reference to FIGS. 2 through 8.

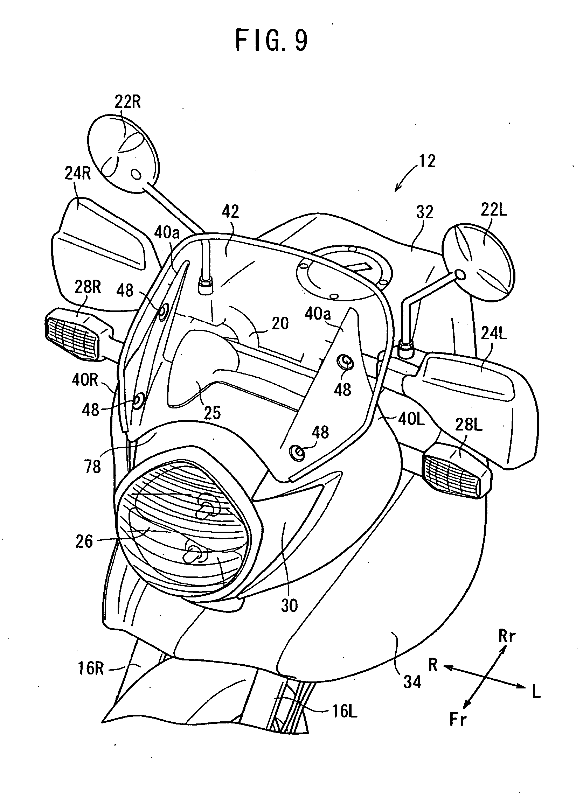

As shown in FIG. 2, a pair of left and right cowling stays 40L, 40R, each having an upward tapered fin 40a of a substantially triangular shape as viewed in front elevation, is disposed on respective both sides of an upper portion of the cowling 30 which covers the front portion of the two-wheeled motor vehicle 12. Normally, the cowling stays 40L, 40R are used to directly mount a windscreen 42 (see FIG. 9) that is smaller than the windscreen 36 on the two-wheeled motor vehicle 12.

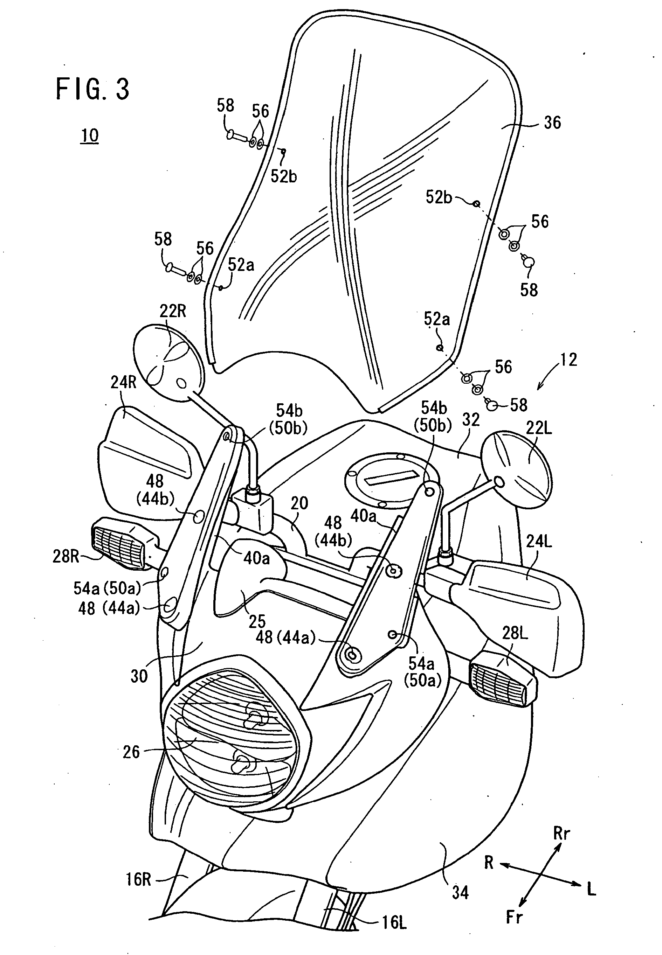

The mounting members 38L, 38R are made of injection-molded resin, for example, and are mounted on the respective cowling stays 40L, 40R, as shown in FIG. 3. Specifically, each of the mounting members 38L, 38R has a mounting hole 44a defined in a front end (lower end) portion thereof and a mounting hole 44b defined in a central portion thereof. The mounting members 38L, 38R are fastened to the cowling stays 40L, 40R by bolts 48 extending through the mounting holes 44a, 44b and threaded into nuts 46a, 46b secured to the cowling stays 40L, 40R. The nuts 46a, 46b secured to the cowling stays 40L, 40R are normally used to mount the small-size windscreen 42 on the cowling stays 40L, 40R (see FIG. 9). With the mounting structure 10 according to the present embodiment, the nuts 46a, 46b secured to the cowling stays 40L, 40R are also used to fasten the mounting members 38L, 38R in position on the cowling stays 40L, 40R. Since the nuts 46a, 46b are shared in mounting the small-size windscreen 42 and the large-size windscreen 36, the number of machining steps and parts required to mount either the small-size windscreen 42 or the large-size windscreen 36 is much smaller than if the small-size windscreen 42 or the large-size windscreen 36 is mounted using its dedicated nuts.

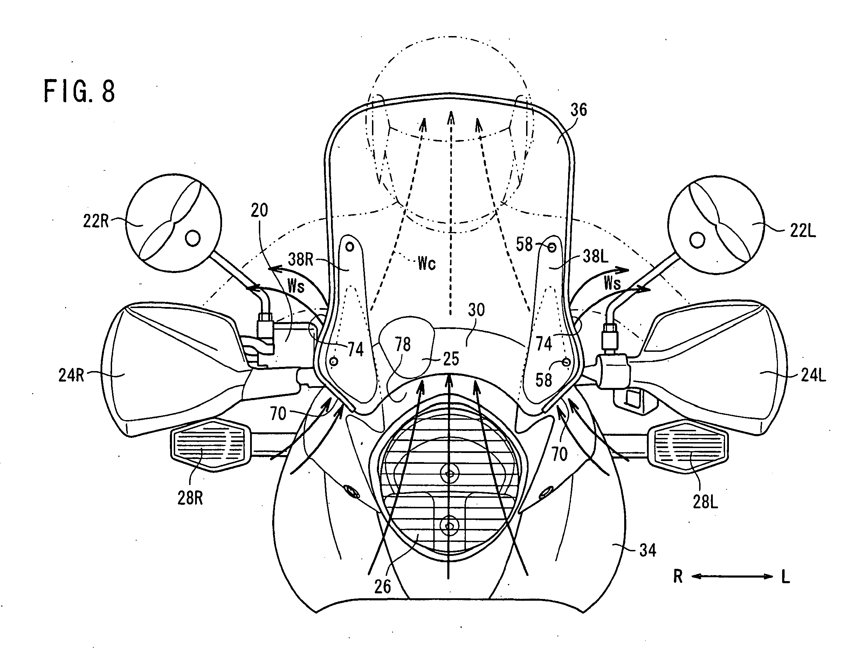

As shown in FIGS. 1 and 3, the mounting members 38L, 38R are fixed to an outer surface of the cowling 30 for positional alignment with respective left and right sides of the large-size windscreen 36. As can be seen from FIGS. 2 and 3, the mounting members 38L, 38R are wider than the respective fins 40a, which are vertically elongate, on respective upper ends of the cowling stays 40L, 40R in the transverse direction of the two-wheeled motor vehicle 12, and longer than the respective fins 40a in the longitudinal direction of the two-wheeled motor vehicle 12, i.e., vertically. The mounting members 38L, 38R are shaped so as to cover substantially the entire (front) surfaces of the respective cowling stays 40L, 40R as viewed in front elevation in FIG. 8.

Each of the mounting members 38L, 38R has two screen mounting holes 50a, 50b (see FIGS. 2 and 3) spaced upwardly from the mounting holes 44a, 44b, respectively. Nuts 54a, 54b are secured to the mounting members 38L, 38R in alignment with the respective screen mounting holes 50a, 50b. The windscreen 36 has two mounting holes 52a, 52b defined in each side thereof in alignment with the screen mounting holes 50a, 50b, respectively. Bolts 58 combined with washers 56 are threaded through the mounting holes 52a, 52b into the nuts 54a, 54b, thereby fastening the windscreen 36 to the cowling stays 40L, 40R, i.e., the cowling 30.

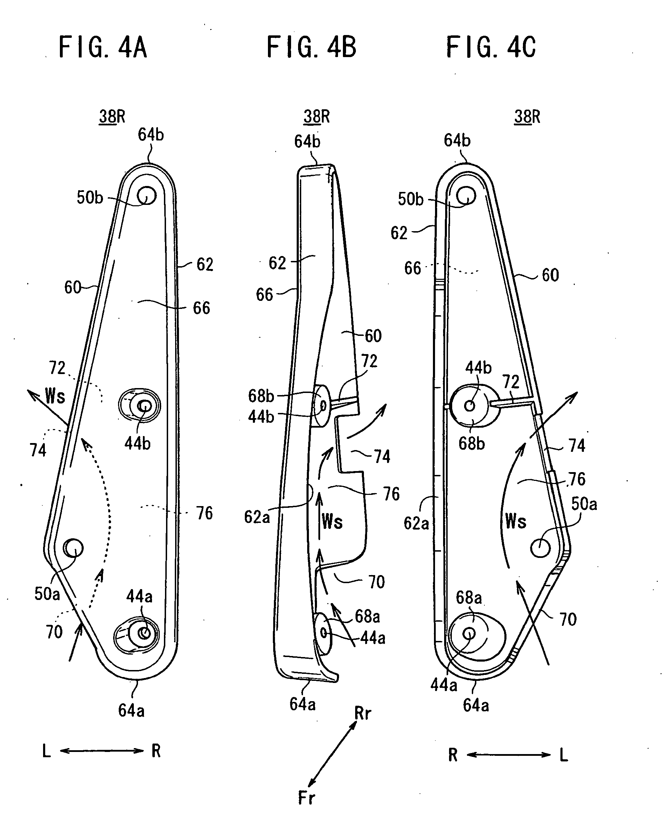

The mounting members 38L, 38R of the mounting structure 10 will be described in detail below with reference to FIGS. 4A through 4C. Since the mounting members 38L, 38R are essentially identical in shape to each other except they are symmetrically shaped, only the mounting member 38R will be described below.

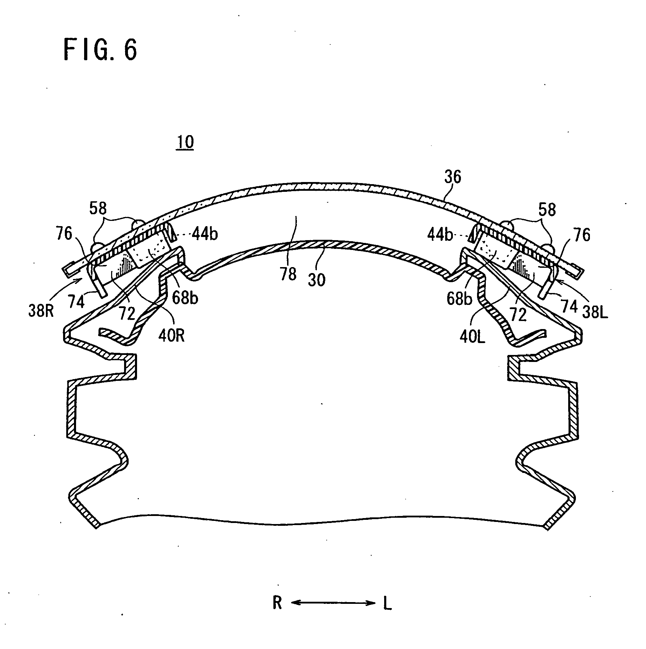

As shown in FIGS. 4A through 4C, the mounting member 38R has a bent outer side surface 60 which is externally positioned in the transverse direction of the two-wheeled motor vehicle 12, a straight inner side surface 62 which is internally positioned in the transverse direction of the two-wheeled motor vehicle 12, curved end surfaces 64a, 64b interconnecting the ends of the outer and inner side surfaces 60, 62, and an outer surface 66 for abutment against the windscreen 36. The mounting member 38R is of a channel-shaped cross section in the transverse direction thereof, i.e., in the transverse direction of the two-wheeled motor vehicle 12, provided by the outer side surface 60, the inner side surface 62, and the outer surface 66 (see FIG. 6). In other words, the mounting member 38R is of a box shape which is open toward the outer surface of the corresponding cowling stay 40R on the cowling 30, i.e., which is open in the side opposite to the outer surface 66.

The mounting holes 44a, 44b through which the mounting member 38R is fastened to the cowling stay 40R is of a counterbored shape that is concave away from the outer surface 66. The mounting holes 44a, 44b have their bottoms defined by respective end faces 68a, 68b shaped along an outer curved surface of the cowling 30. The inner side surface 62 has a curved end face 62a which is streamlined along the direction in which the curved end face 62a extends. The curved end face 62a is also shaped along the outer curved surface of the cowling 30. Therefore, the mounting member 38R is fixed to the cowling stay 40R in complementary relationship thereto without impairing the appearance of the two-wheeled motor vehicle 12.

As shown in FIGS. 6 and 8, the mounting members 38R, 38L as fastened to the cowling stays 40R, 40L provide a clearance substantially fully circumferentially therearound between themselves and upper portions (near the fins 40a) of the cowling stays 40R, 40L.

The mounting member 38R has an air inlet port 70 defined in a front end portion (lower end portion in FIGS. 4A through 4C) of the outer side surface 60 near the curved end surface 64a. With the mounting member 38R being fixed to the cowling stay 40R, the air inlet port 70 is open downwardly in an obliquely outward direction on the front side of the two-wheeled motor vehicle 12. The mounting member 38R also has a rib 72 extending in the inner space thereof across the central mounting hole 44b in the transverse direction thereof, i.e., in the transverse direction of the two-wheeled motor vehicle 12. The rib 72 divides the inner space of the mounting member 38R into upper and lower regions. The rib 72 extends from an inner side of the outer side surface 60 across the mounting hole 44b to an inner side of the inner side surface 62. The mounting member 38R also has an air outlet port (air outlet) 74 defined in a substantially central portion of the outer side surface 60 between the air inlet port 70 and the rib 72 essentially directly below the rib 72. The air outlet port 74 is open outwardly in the transverse direction of the two-wheeled motor vehicle 12.

Therefore, the inner space of the mounting member 38R serves as a passage 76 defined between the outer side surface 60, the inner side surface 62, and the outer surface of the cowling 30, for passing therethrough air (ambient air) introduced from the air inlet port 70. The passage 76 is blocked by the rib 72 substantially centrally in the mounting member 38R and is in fluid communication with the air outlet port 74. Air introduced from the air inlet port 70 flows through the passage 76, is blocked by the rib 72, and flows out through the air outlet port 74 in the transverse direction of the two-wheeled motor vehicle 12, as indicated by the arrows Ws in FIGS. 4A through 4C.

As shown in FIGS. 7 and 8, with the mounting members 38R, 38L being fastened to the cowling stays 40R, 40L, the air outlet ports 74 are open at a vertical position near the grips (the hand covers 24R, 24L) of the handle 20. The air outlet port 74 shown in FIGS. 4A through 4C is in the form of a simple opening. However, the air outlet port 74 may be in the form of a plurality of slits or may be any of various forms insofar as they allow air introduced from the air inlet port 70 to flow out of the mounting member 38R.

The large-size windscreen 36 that is secured in place by the mounting members 38L, 38R is of a substantially saddle-shaped curved configuration (see FIG. 3), and has an upper end (rear end) positioned above the side mirrors 22L, 22R at a height close to the horizontal line of sight of the rider seated on the rider's seat (see FIGS. 7 and 8).

When the windscreen 36 is mounted on the cowling 30, i.e., the cowling stays 40L, 40R, by the mounting members 38L, 38R, a sufficient clearance 78 for introducing ambient air is defined between a front end (lower end) of the windscreen 36 and the outer surface of the cowling 30 positioned between the cowling stays 40L, 40R (see FIGS. 1, 5, and 6).

Specifically, the clearance 78 is defined between the front end (lower end) of the windscreen 36 and the front end of the cowling 30, i.e., the upper end of the headlight 26, and has a height corresponding to the thickness of the mounting members 38L, 38R. The clearance 78 has a width defined between the cowling stays 40L, 40R and also between the inner side surfaces 62 of the mounting members 38L, 38R. The thickness of the mounting members 38L, 38R is set to a value large enough to introduce sufficient air through the clearance 78. Similarly, the distance between the mounting members 38L, 38R is set to a value large enough to introduce sufficient air through the clearance 78. Stated otherwise, the mounting members 38L, 38R interconnect the cowling 30 and the windscreen 36 such that they are spaced from each other by a distance providing the clearance 78.

The clearance 78 serves as an air inlet port for introducing air from a central area in front of the two-wheeled motor vehicle 12. The rate of air flowing through the clearance 78 toward the rider is sufficiently larger than the rate of air flowing through the passages 76 of the mounting members 38L, 38R. To provide those air rates, the area of the opening of the clearance 78 is sufficiently larger than the area of the opening of the air inlet ports 70 of the two mounting members 38L, 38R (see FIG. 6).

With the mounting structure 10 according to the present embodiment, when the windscreen 36 is mounted on the cowling stays 40L, 40R by the mounting members 38L, 38R, the clearance 78 large enough to introduce ambient air is defined between the front ends of the windscreen 36 and the cowling 30. The mounting members 38L, 38R each have the passage 76 interconnecting the air inlet port 70 and the air outlet port 74 for introducing air from the sides of the front portion of the two-wheeled motor vehicle 12 and discharging the introduced air laterally outward from the two-wheeled motor vehicle 12, and the rib 72 disposed closely to the passage 76 and blocking the passage 76. Accordingly, ambient air can be introduced simultaneously through the clearance 78 and the air inlet ports 70.

As shown in FIGS. 7 and 8, air flows Wc introduced through the clearance 78 are suitably rectified to flow rearward along the inner surface of the large-size windscreen 36 toward and beyond the head of the rider. Air flows Ws introduced through the air inlet ports 70 of the left and right mounting members 38L, 38R are rectified to flow laterally outward from the two-wheeled motor vehicle 12 while evading the rider. Air flows W around the side edges of the windscreen 36 into the space behind the windscreen 36 as indicated by the dotted arrows in FIG. 7, as is the case with the related art, are thus reduced, and hence the Karman vortex street against the abdominal region of the driver and the pressure of air on the abdominal region of the rider are effectively reduced.

Therefore, the mounting structure 10 according to the present embodiment can reduce air flows around the side edges of the windscreen 36 because of the air inlet ports 70, the passages 76, and the air outlet ports 74 in the mounting members 38L, 38R in addition to the clearance 78. The mounting structure 10 is thus capable of more effectively protecting the rider from wind, and improving the environment in which the rider rides on the two-wheeled motor vehicle 12.

Furthermore, the ribs 72 disposed in the mounting members 38L, 38R can effectively deflect the air introduced through the air inlet ports 70 and passing through the passages 76 to flow out of the air outlet ports 74 laterally outward from the two-wheeled motor vehicle 12. Even though the mounting members 38L, 38R supporting the large-size windscreen 36 are of a large vertical length due to the large size of the windscreen 36, the ribs 72 allow the air outlet ports 74 to be located in a desired position such as in the central areas of the mounting members 38L, 38R. Accordingly, the air can reliably be discharged from the mounting members 38L, 38R, and the air flows from the side edges of the windscreen 36 can reliably be reduced, with a relatively simple structure. Depending on the shape of a windscreen mounted in place by the mounting members 38L, 38R, however, the vertical length of the mounting members 38L, 38R may be reduced, dispensing with the ribs 72.

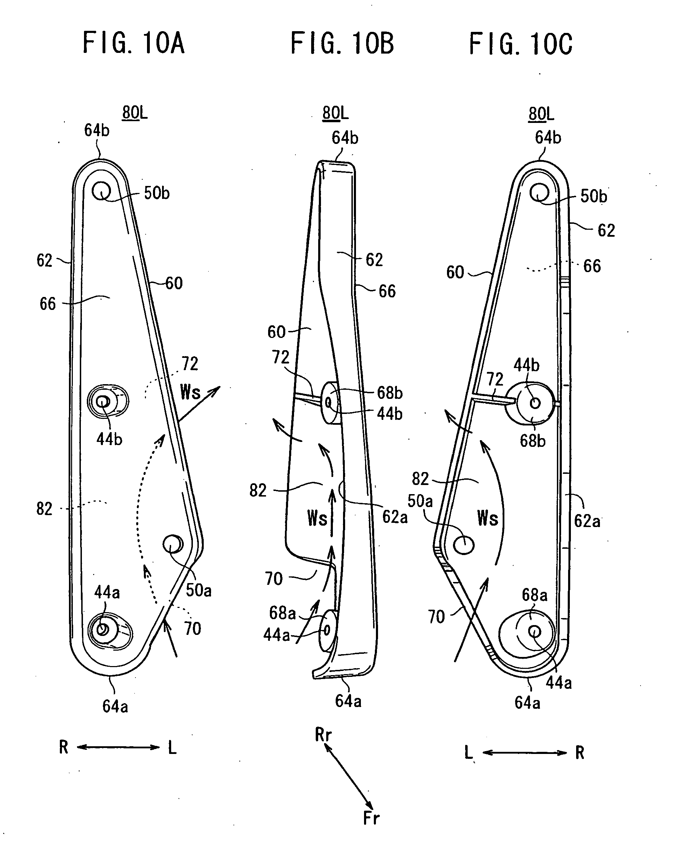

With the mounting members 38L, 38R of the mounting structure 10, air that is introduced through the air inlet ports 70 flows out of the air outlet ports 74 defined in the outer side surfaces 60 of the mounting members 38L, 38R to the outer sides of the two-wheeled motor vehicle 12. However, as shown in FIGS. 10A through 10C, a modified mounting structure 10a for mounting a windscreen may comprise mounting members 80L, 80R free of the air outlet ports 74 in the outer side surfaces 60.

FIG. 10A is a front elevational view of the mounting member 80L. FIG. 10B is a side elevational view of the mounting member 80L. FIG. 10C is a rear elevational view of the mounting member 80L. Since the mounting members 80L, 80R are essentially identical in shape to each other except they are symmetrically shaped, only the mounting member 80L will be described below.

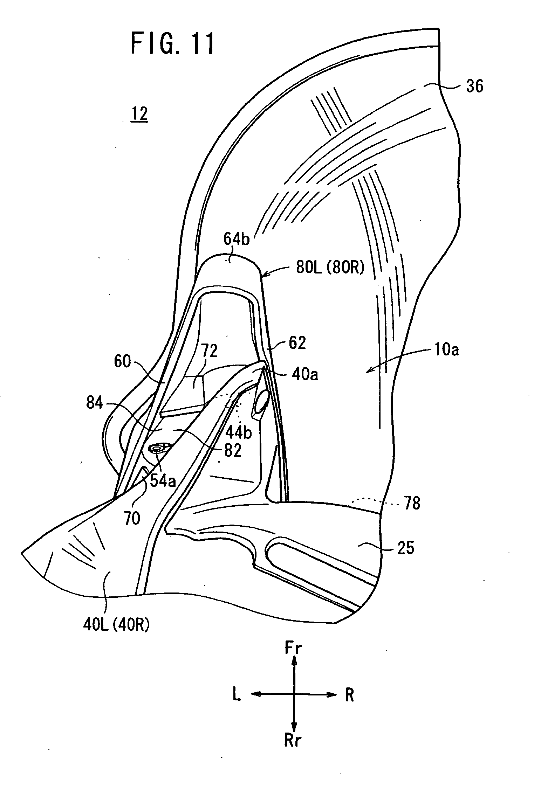

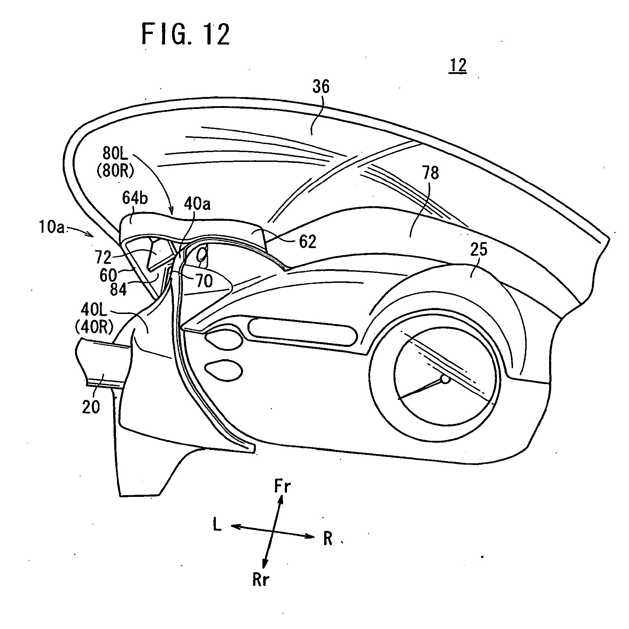

As shown in FIGS. 11 and 12, the mounting member 80L is fastened to the cowling stay 40L such that the upper portion of the mounting member 80L near the curved end surface 64b is offset outwardly in the transverse direction of the two-wheeled motor vehicle 12. The inner space of the mounting member 80L serves as a passage 82 defined between the outer side surface 60, the inner side surface 62, and the outer surface of the cowling 30, for passing therethrough air (ambient air) introduced from the air inlet port 70 (see the arrows Ws in FIGS. 10A through 10C). The passage 82 is open outwardly through a clearance 84 that is defined by the outer side surface 60 displaced off the outer surface of the cowling 30 (see FIGS. 11 and 12). Accordingly, the mounting member 80L has an air outlet provided by the clearance 84 that is formed when a portion of the opening of the mounting member 80L, which is of a channel-shaped cross section provided by the outer side surface 60, the inner side surface 62, and the outer surface 66, is displaced off the outer surface of the cowling 30 (the cowling stay 40L).

As the cowling 30 (the cowling stays 40L, 40R) has an outer profile curved so as to be retracted rearward, the air outlet can be formed based on the rearward-retracted outer profile of the cowling 30. The rearward-retracted outer profile of the cowling 30 allows air to be automatically guided rearward along the cowling 30. Therefore, as with the mounting structure 10 shown in FIGS. 7 and 8, air flows Ws introduced through the air inlet ports 70 of the left and right mounting members 80L, 80R are rectified to flow laterally outward from the two-wheeled motor vehicle 12 while evading the rider. The mounting structure 10a is thus capable of more effectively protecting the rider from wind, and improving the environment in which the rider rides on the two-wheeled motor vehicle 12. The mounting members 80L, 80R are lower in cost and better in appearance as no air outlet ports need to be formed therein.

As shown in FIG. 12, the rider seated on the rider's seat is almost unable to see the clearance 84 as the air outlet because of the cowling 30. Therefore, the air flowing out of the clearance 84 also does not flow directly to the rider, but can be discharged laterally outwardly from the two-wheeled motor vehicle 12. As can be understood from FIG. 12, since almost no clearance is defined between the cowling 30 and the inner side surface 62 of the mounting member 80L, air flowing through the passage 82 can be guided more reliably through the clearance 84 out of the two-wheeled motor vehicle 12.

The mounting structure 10 according to the embodiment of the present invention and the modified mounting structure 10a may be changed or modified in various manners within the scope of the present invention.

For example, the present invention has been described as being applied to an on-road-type two-wheeled motor vehicle. However, the principles of the present invention are also applicable to any of various other two-wheeled motor vehicles, e.g., a scooter-type two-wheeled motor vehicle and an off-road-type two-wheeled motor vehicle.

The mounting members 38L, 38R or 80L, 80R may be changed in shape depending on the shapes of the cowling stays 40L, 40R and the cowling 30. Furthermore, the mounting members 38L, 38R or 80L, 80R may be of a unitary structure including left and right mounting members integrally combined with each other.

A mounting structure (10) for a windscreen includes a mounting member (38L, 38R) fixed to an outer surface of a cowling (30) positionally corresponding to sides of the windscreen (36), for interconnecting the windscreen (36) and the cowling (30) which are spaced from each other by a predetermined distance. The windscreen (36) and the cowling (30) have respective front ends with a clearance (78) being defined therebetween for introducing air. The mounting member (38L, 38R) has an air inlet port (70) which is open forward, a passage (76) for allowing air to flow in the mounting member, and an air outlet (74) which is in fluid communication with the passage (76) and is open laterally, for discharging air flowing from the air inlet port (70) into the passage (76) through the air outlet (74) laterally outward from the mounting member (38L, 38R).

## Claims

1. A windscreen mounting structure on a cowling (30) which covers a front portion of a motor vehicle (12), comprising:
a mounting member (38L, 38R, 80L, 80R) fixed to an outer surface of said cowling (30) positionally corresponding to opposite sides of said windscreen (36), for interconnecting said windscreen (36) and said cowling (30) which are spaced from each other by a predetermined distance;
said windscreen (36) and said cowling (30) having respective front ends with a clearance (78) being defined therebetween for introducing air through said clearance (78), said clearance (78) being disposed on a lateral side of said mounting member (38L, 38R, 80L, 80R);
said mounting member (38L, 38R, 80L, 80R) having an air inlet port (70) which is open forward, a passage (76, 82) for allowing air to flow in the mounting member (38L, 38R, 80L, 80R), and an air outlet (74, 84) which is in fluid communication with said passage (76, 82) and is open laterally, for discharging air flowing from said air inlet port (70) into said passage (76, 82), through said air outlet (74, 84) laterally outward from said mounting member (38L, 38R, 80L, 80R), whereby air can be introduced simultaneously through said clearance (78) and said air inlet port (70).

2. A windscreen mounting structure according to claim 1, wherein said mounting member (38L, 38R, 80L, 80R) is of a channel-shaped cross section in a transverse direction of said motor vehicle (12), said channel-shaped cross section having an opening facing the outer surface of said cowling (30) to define said passage (76, 82);
said passage (76, 82) being blocked by a rib (72) extending in the mounting member (38L, 38R, 80L, 80R) along said transverse direction of said motor vehicle (12), said air outlet (74, 84) being held in fluid communication with said passage (76, 82) between said rib (72) and said air inlet port (70);
whereby the air flowing from said air inlet port (70) into said passage (76, 82) is discharged laterally outwardly from said mounting member (38L, 38R, 80L, 80R).

3. A windscreen mounting structure according to claim 2, wherein said air outlet (74, 84) is defined by partially cutting out an outer side surface (60) of the mounting member (38L, 38R) in the transverse direction of said motor vehicle (12) or is defined by a portion of the opening of said channel-shaped cross section of the mounting member (80L, 80R) which is displaced off the outer surface of said cowling (30).

4. A windscreen mounting structure according to any one of claims 1 through 3, wherein said cowling (30) has a fastening member (46a, 46b) for fastening a windscreen (42) which is different in shape from said windscreen (36); and
said mounting member (38L, 38R, 80L, 80R) is fastened to said cowling (30) by said fastening member (46a, 46b).

## Patentansprüche

1. Windschutzscheiben-Anbringungsvorrichtung auf einer Verschalung (30), welche einen vorderen Abschnitt eines Kraftfahrzeugs (12) abdeckt, umfassend:
ein Anbringungselement (38L, 38R, 80L, 80R), das an einer Außenfläche der Verschalung (30) die Lage betreffend entsprechend gegenüberliegenden Seiten der Windschutzscheibe (36) fixiert ist, zum miteinander Verbinden der Windschutzscheibe (36) und der Verschalung (30), die voneinander in einem vorbestimmten Abstand angeordnet sind,
wobei die Windschutzscheibe (36) und die Verschalung (30) jeweilige vordere Enden mit einer Aussparung (78) aufweisen, die dazwischen zum Einführen von Luft durch die Aussparung (78) definiert ist,
wobei die Aussparung (78) auf einer lateralen Seite des Anbringungselements (38L, 38R, 80L, 80R) angeordnet ist,
wobei das Anbringungselement (38L, 38R, 80L, 80R) einen Lufteinlass-Anschluss (70) aufweist, der nach vorne geöffnet ist, eine Passage (76, 82), die es Luft ermöglicht, in das Anbringungselement (38L, 38R, 80L, 80R) zu strömen, und einen Luftauslass (74, 84), welcher in Fluid-Verbindung mit der Passage (76, 82) ist und welcher lateral geöffnet ist, zum Abführen von aus dem Lufteinlass-Anschluss (70) in die Passage (76, 82) strömender Luft durch den Luftauslass (74, 84) von dem Anbringungselement (38L, 38R, 80L, 80R) lateral nach Außen, wodurch Luft simultan durch die Aussparung (78) und den Lufteinlass-Anschluss (70) eingeführt werden kann.

2. Windschutzscheiben-Anbringungsvorrichtung nach Anspruch 1,
wobei das Anbringungselement (38L, 38R, 80L, 80R) in eine transversale Richtung des Kraftfahrzeugs (12) einen kanalförmigen Querschnitt aufweist,
wobei der kanalförmige Querschnitt eine Öffnung aufweist, die der Außenfläche der Verschalung (30) zugewandt ist, um die Passage (76, 82) zu definieren,
wobei die Passage (76, 82) durch eine Rippe (72) blockiert ist, welche sich in dem Anbringungselement (38L, 38R, 80L, 80R) entlang der transversalen Richtung des Kraftfahrzeugs (12) erstreckt,
wobei der Luftauslass (74, 84) in Fluid-Verbindung mit der Passage (76, 82) zwischen der Rippe (72) und dem Lufteinlass-Anschluss (70) gehalten ist,
wodurch die aus dem Lufteinlass-Anschluss (70) in die Passage (76, 82) strömende Luft lateral nach außen von dem Anbringungselement (38L, 38R, 80L, 80R) abgeführt wird.

3. Windschutzscheiben-Anbringungsvorrichtung nach Anspruch 2,
wobei der Luftauslass (74, 84) durch partielles Ausschneiden einer äußeren Seitenfläche (60) des Anbringungselements (38L, 38R) in die transversale Richtung des Kraftfahrzeugs (12) definiert ist, oder durch einen Abschnitt der Öffnung des kanalförmigen Querschnitts des Anbringungselements (80L, 80R) definiert ist, das von der Außenfläche der Verschalung (30) versetzt ist.

4. Windschutzscheiben-Anbringungsvorrichtung nach einem der Ansprüche 1 bis 3,
wobei die Verschalung (30) ein Befestigungselement (46a, 46b) aufweist zum Befestigen einer Windschutzscheibe (42), die bzgl. der Form von der Windschutzscheibe (36) verschieden ist, und
wobei das Anbringungselement (38L, 38R, 80L, 80R) an der Verschalung (30) vermittels des Befestigungselements (46a, 46b) befestigt ist.

## Revendications

1. Structure de montage de pare-brise sur un capot (30) qui recouvre une partie avant d'un véhicule à moteur (12), comprenant :
un élément de montage (38L, 38R, 80L, 80R) fixé sur une surface externe dudit capot (30) correspondant du point de vue de la position aux côtés opposés dudit pare-brise (36), pour interconnecter ledit pare-brise (36) et ledit capot (30) qui sont éloignés l'un de l'autre par une distance prédéterminée ;
ledit pare-brise (36) et ledit capot (30) ayant des extrémités avant respectives avec un jeu (78) qui est défini entre eux pour introduire de l'air par ledit jeu (78), ledit jeu (78) étant disposé sur un côté latéral dudit élément de montage (38L, 38R, 80L, 80R) ;
ledit élément de montage (38L, 38R, 80L, 80R) ayant un orifice d'entrée d'air (70) qui est ouvert vers l'avant, un passage (76, 82) pour permettre à l'air de s'écouler dans l'élément de montage (38L, 38R, 80L, 80R), et une sortie d'air (74, 84) qui est en communication de fluide avec ledit passage (76, 82) et est ouverte latéralement pour décharger l'air s'écoulant à partir dudit orifice d'entrée d'air (70) dans ledit passage (76, 82), par ladite sortie d'air (74, 84) latéralement vers l'extérieur à partir dudit élément de montage (38L, 38R, 80L, 80R), moyennant quoi l'air peut être introduit simultanément par ledit jeu (78) et ledit orifice d'entrée d'air (70).

2. Structure de montage de pare-brise selon la revendication 1, dans laquelle ledit élément de montage (38L ; 38R, 80L, 80R) a une section transversale en forme de canal dans une direction transversale dudit véhicule à moteur (12), ladite section transversale en forme de canal ayant une ouverture faisant face à la surface externe dudit capot (30) pour définir ledit passage (76, 82) ;
ledit passage (76, 82) étant bloqué par une nervure (72) s'étendant dans l'élément de montage (38L, 38R, 80L, 80R) le long de ladite direction transversale dudit véhicule à moteur (12), ladite sortie d'air (74, 84) étant maintenue en communication de fluide avec ledit passage (76, 82) entre ladite nervure (72) et ledit orifice d'entrée d'air (70) ;
moyennant quoi l'air s'écoulant par ledit orifice d'entrée d'air (70) dans ledit passage (76, 82) est déchargé latéralement vers l'extérieur à partir dudit élément de montage (38L, 38R, 80L, 80R).

3. Structure de montage de pare-brise selon la revendication 2, dans laquelle ladite sortie d'air (74, 84) est définie en coupant partiellement une surface latérale externe (60) de l'élément de montage (38L, 38R) dans la direction transversale dudit véhicule à moteur (12) ou est définie par une partie de l'ouverture de ladite section transversale en forme de canal de l'élément de montage (80L, 80R) qui est déplacé de la surface externe dudit capot (30).

4. Structure de montage de pare-brise selon l'une quelconque des revendications 1 à 3, dans laquelle ledit capot (30) a un élément de fixation (46a, 46b) pour fixer un pare-brise (42) qui est différent du point de vue de la forme dudit pare-brise (36) ; et
ledit élément de montage (38L, 38R, 80L, 80R) est fixé sur ledit capot (30) par ledit élément de fixation (46a, 46b).
